# EUROPEAN PATENT APPLICATION

(11) **EP 4 819 253 A1**
(43) Date of publication of application: **07.10.2026**
(21) Application number: 26169063.0
(22) Date of filing: 30.03.2026
(51) Int. Cl.: H01M 6/52, H01M 10/48

(54) **LITHIUM BATTERY RECYCLING PREPARATION SWITCH**

(30) Priority: 02.04.2025 US 202563782257 P; 18.03.2026 US 202619570897
(71) Applicant: Vertiv Corporation, Westerville, OH 43082 (US)
(72) Inventor: AINEHVAND, Mohammad Sadegh, Westerville, 43082 (US); Dariush, ABBASI, Westerville, 43082 (US)
(74) Representative: Beal, James Michael

(57) **Abstract**

A battery switch may include a first terminal electrically coupled to a battery. The battery switch may include a second terminal electrically coupled to a battery management system. The battery switch may include a contact arm electrically coupled to the first terminal and electrically coupled to the second terminal. The battery switch may include a power discharge assembly comprising a third terminal electrically couplable to the contact arm, a first resistor electrically coupled to the third terminal and a return line, a second resistor electrically coupled to the third terminal, a diode electrically coupled to the second resistor and the return line.

## Description

### CROSS-REFERENCE TO RELATED APPLICATIONS

The present application claims the benefit of priority of United States Provisional Patent No. 63/782,257, filed on April 2, 2025, and United States Non-provisional Patent No. 19/570,897, filed on March 18, 2026.

### TECHNICAL FIELD

The present disclosure relates to battery-associated power systems and, particularly, to safe replacement of batteries in battery-associated power systems.

### BACKGROUND

Lithium-ion battery recycling is a significant challenge in the electronics industry due to the complexity and cost of safely handling used batteries. Most lithium batteries, at or near the end of their useful life, still contain residual energy, as the battery management system (BMS) associated with the batteries typically does not allow the voltage of cells to drop below a specific threshold. The residual energy poses safety risks during transportation to the recycling plant. Additionally, as more industries start using lithium batteries, and as these batteries approach the end of their life cycle, new regulatory measures for safe recycling may be instituted. Some companies may be required by law to participate in battery recycling or integrate features that facilitate recycling. As such, there is a need for a system and method for efficiently draining residual energy from these batteries.

### SUMMARY

Accordingly, the present disclosure is directed to a power discharge switch for a battery of power system.

In one or more embodiments, a battery switch is disclosed. In embodiments, the battery switch includes: a first terminal electrically coupled to a battery; a second terminal electrically coupled to a battery management system; a contact arm electrically coupled to the first terminal and electrically couplable to the second terminal; a power discharge assembly including: a third terminal electrically couplable to the contact arm; a first resistor electrically coupled to the third terminal and a return line; a second resistor electrically coupled to the third terminal; a diode electrically coupled to the second resistor and the return line.

In one or more embodiments, an electrical system is disclosed. In embodiments, the electrical system includes a battery switch including: a first terminal electrically coupled to a battery; a second terminal electrically coupled to a battery management sub-system; a contact arm electrically coupled to the first terminal and electrically couplable to the second terminal; a power discharge assembly including: a third terminal electrically couplable to the contact arm; a first resistor electrically coupled to the third terminal and a return line; a second resistor electrically coupled to the third terminal; a diode electrically coupled to the second resistor and the return line.

In one or more embodiments, a method for discharging a battery of a power system is disclosed. In embodiments, the method includes monitoring a capacity of the battery via a battery management sub-system. In embodiments, the method includes, upon a detection of the capacity of the battery below a threshold, causing the battery switch to articulate a contact arm to a terminal of a power discharge assembly. In embodiments, the method includes discharging residual energy of the battery to a return line via the power discharge assembly.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF DRAWINGS

The numerous advantages of the disclosure may be better understood by those skilled in the art by reference to the accompanying figures.
FIG. 1 illustrates a graph depicting a measurement of a capacity of a lithium battery, specifically, an association between the voltage of a battery over temperature, in accordance with one or more embodiments of the disclosure.
FIG. 2A is a diagram illustrating a power system, in accordance with one or more embodiments of the disclosure.
FIG. 2B is a diagram illustrating a power system that includes a system computer, in accordance with one or more embodiments of the disclosure.
FIG. 3A illustrates a diagram of a close-up view of the battery switch in an initial configuration, in accordance with one or more embodiments of the disclosure.
FIG. 3B illustrates a diagram of a close-up view of the battery switch in a power discharge configuration, in accordance with one or more embodiments of the disclosure.
FIG. 4 illustrates a process flow diagram depicting a method for discharging a battery of a power system, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present), and B is false (or not present), A is false (or not present) and B is true (or present), and both A and B are true (or present).

In addition, the use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "embodiments" means that a particular element, feature, structure, or characteristic described in connection with the embodiment is included in at least one embodiment disclosed herein. The appearances of the phrase "in embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Disclosed is a battery switch that, when operated, causes the battery to be discharged. The battery switch may be used when a battery or battery pack has been determined to be faulty, allowing the battery to safely discharge before removal of the battery from a power system. Once discharged and removed from the power system, the battery may then be safely transported to a recycling facility and recycled. For battery switches used in lithium battery systems, the battery switch may be considered as a Lithium Battery Recycling Preparation Switch (LBRPS).

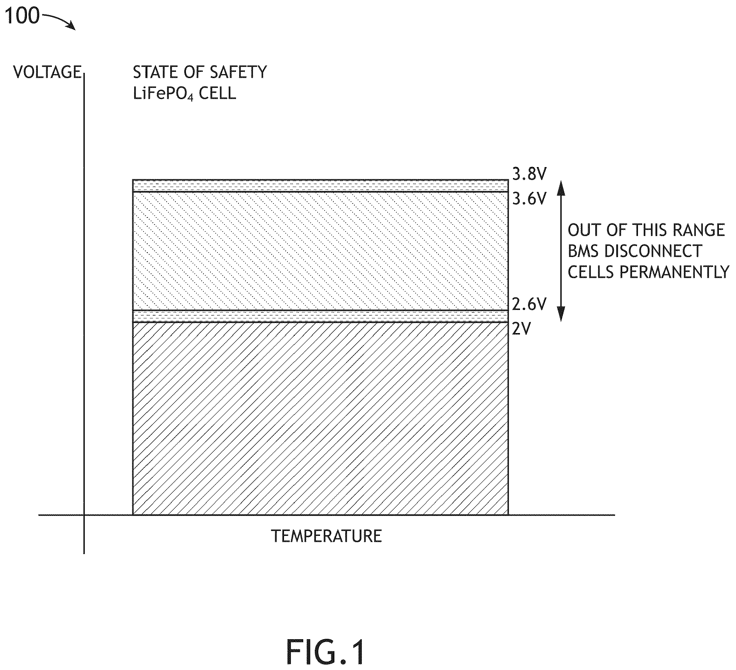

FIG. 1 illustrates a graph 100 depicting a measurement of a capacity of a lithium battery, specifically, an association between the voltage of a battery over temperature, in accordance with one or more embodiments of the disclosure. The graph 100 illustrates a non-fault range of voltages (e.g., 2.6 V to 3.6 V) where a battery may be expected to operate. The graph 100 further illustrates a low caution range (e.g., 2.0 V to 2.6 V) and a high caution range (e.g., 3.6 to 3.8) where a battery may be considered at or near fault. A battery operating above 3.8 V and particularly below 2V may be considered faulty, requiring replacement. Although a battery operating under 2.0 V (e.g., 1.9 V) may be considered faulty, the battery still has a considerable charge that could be dangerous if the battery is not discharged completely before being recycled. For example, a battery with a residual charge may spark or cause a fire if the battery is punctured during transportation to a recycling center while still having a residual charge.

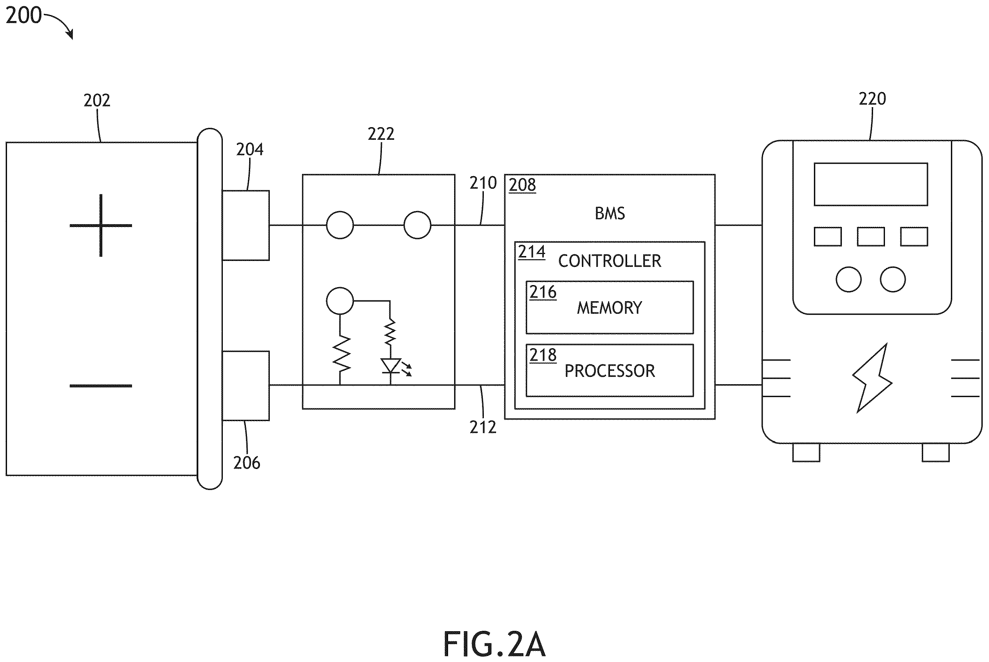

FIG. 2A is a diagram illustrating a power system 200, in accordance with one or more embodiments of the disclosure. The power system 200 may be used for distributing power for any type of load or industry. For example, the power system 200 may be used for the powering of one or more servers.

In embodiments, the system 200 includes a battery 202. The battery 202 may include any type of device capable of storing an electric charge including, but not limited to, lithium-ion batteries, lead-acid batteries, nickel-cadmium batteries, sodium-sulfur batteries, flow batteries, and zinc-air batteries. For example, the battery 202 may include a lithium-ion type battery including, but not limited to, lithium cobalt oxide batteries, lithium nickel cobalt aluminum oxide batteries, lithium iron phosphate batteries, lithium manganese oxide batteries, lithium nickel manganese cobalt batteries, and lithium titanate batteries. The battery 202 may be a single-cell battery or a stack/set of batteries. The battery may include a positive terminal 204 and a negative terminal 206.

In embodiments, the system 200 includes a battery management sub-system 208 electrically coupled to the battery 202 via a supply line 210 and a return line 212. The battery management sub-system 208 monitors various parameters of the battery 202 to ensure proper functioning, safety, and longevity of the battery 202. For example, the battery management sub-system 208 may monitor the battery via one or more of voltage monitoring, temperature monitoring, taking internal resistance measurements, current monitoring, determining cell balancing, calculating the state of change, and determining the state of charge discrepancies. The battery management sub-system 208 may further track the number of charge-discharge cycles, and otherwise communicate with the battery, including individual cells of the battery. The battery management sub-system 208 may include a controller 214 configured to carry out one or more functions of the system 200 as described herein. The controller 214 may include one or more processors 218 and memory 216.

In embodiments, the system 200 includes a power supply 220 electrically coupled to the battery management sub-system 208. The power supply 220 may provide power to a load from an outside electrical source (e.g., utility power), then switch to providing power from the battery 202 when the utility power is disrupted. In some embodiments, the power supply 220 may supply battery power from battery 202 as the initial source of power to the load. The power supply 220 may be any type of power distribution device including, but not limited to, an uninterruptible power supply (UPS).

In embodiments, the system 200 includes a battery switch 222 communicatively coupled to the battery 202 and the battery management sub-system 208. The battery switch 222 is configured to discharge the battery 202. For example, upon an indication by the battery management sub-system 208 that the battery 202 is faulty, the battery switch 222 may be activated, causing residual power to be directed to the return line 212. The battery switch 222 may be controlled by the battery management sub-system 208, by another computer/controller, and/or manually. Further description of the battery switch is included herein.

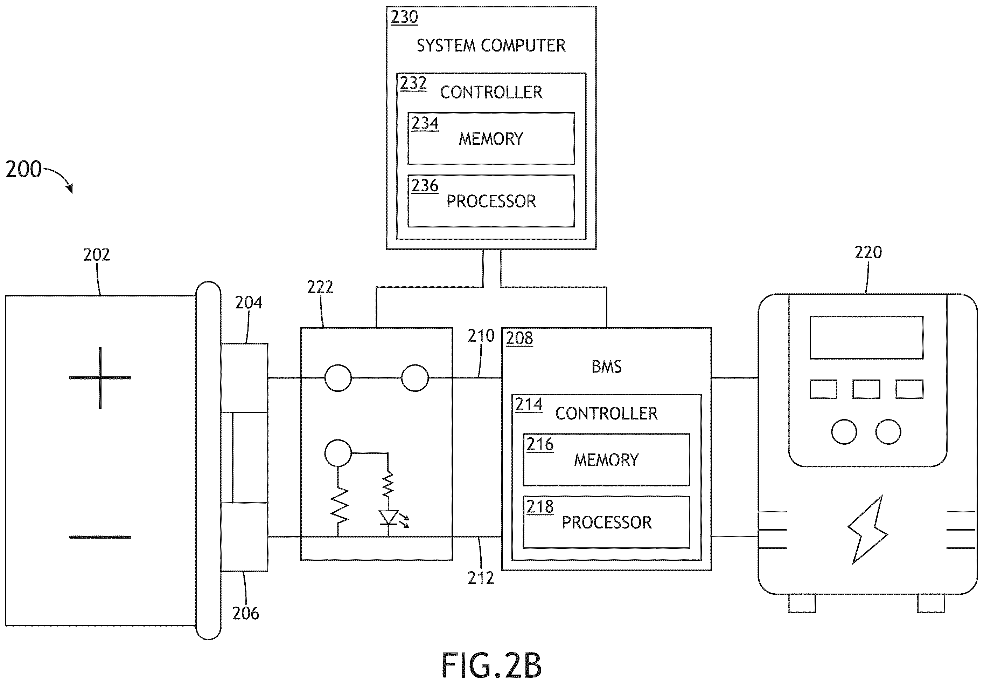

FIG. 2B is a diagram illustrating a power system 200 that includes a system computer 230, in accordance with one or more embodiments of the disclosure. The system computer 230 may include or operate as a controller 232 configured to provide for or control one or more functions of the system 200. The controller 232 may include one or more processors 236 and memory 234.

The system computer 230 may be communicatively coupled to the battery management sub-system 208, the battery switch 222, or both the battery management sub-system 208 and the battery switch 222. For example, the system computer 230 may receive battery-associated data (e.g., battery capacity data) from the battery management sub-system 208 and cause the battery switch 222 to activate either by a direct link with the battery switch 222 or through an activation command sent to the battery management sub-system 208, which then causes the battery switch 222 to activate.

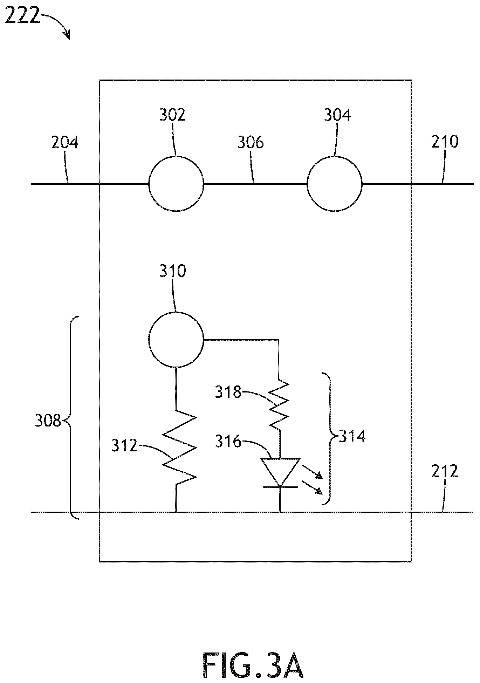

FIG. 3A illustrates a diagram of a close-up view of the battery switch 222 in an initial configuration (e.g., a non-discharging configuration), in accordance with one or more embodiments of the disclosure. The battery switch 222 may be implemented as an automatic switch (e.g., controlled by the system computer 230 and/or the battery management sub-system 208), a manual switch, or a hybrid automatic/manual switch. For example, for an automatic or hybrid switch, the system computer 230 and/or the battery management sub-system 208 may receive a signal (e.g., a threshold signal) indicating that the battery 202 is not performing to a needed threshold level, resulting in one or more controllers 214, 232 causing the battery switch 222 to be activated.

In embodiments, the battery switch 222 includes a first terminal 302 electrically coupled to the battery 202. For example, the first terminal 302 may be electrically coupled to the positive terminal 204 of the battery 202.

In embodiments, the battery switch 222 includes a second terminal 304 electrically coupled to the battery management sub-system 208. For example, the second terminal 304 may be coupled to the supply line 210 that leads to the battery management sub-system 208.

In embodiments, the battery switch 222 includes a contact arm 306 electrically coupled to the first terminal 302 and electrically couplable to the second terminal 304. For example, when the battery switch 222 is in the initial configuration, the contact arm 306 may be coupled to both the first terminal 302 and the second terminal 304.

In embodiments, the battery switch 222 includes a power discharge assembly 308. The power discharge assembly 308 assists the system 200 in draining residual energy from the battery 202 when the battery switch 222 is switched from an initial configuration to an energy discharge configuration.

In embodiments, the power discharge assembly 308 includes a third terminal 310 couplable to the contact arm 306. For example, the third terminal 310 may be coupled to the contact arm 306 when the battery switch 222 is in the energy drain configuration. The third terminal is further electrically coupled to the return line 212 via one or more electrical components. For example, and in embodiments, the power discharge assembly 308 includes a first resistor 312 electrically coupled to the third terminal 310 and the return line 212. The first resistor 312 may be configured as a discharge resistor or bleeder resistor, functioning to drain the residual energy from the battery 202.

In embodiments, the power discharge assembly 308 includes an indicator sub-assembly 314 coupled to the third terminal 310 and the return line 212. The indicator sub-assembly 314 may also be positioned in line with the first resistor 312. The indicator sub-assembly 314 functions to indicate when the battery switch 222 has been switched to the energy drain configuration and/or to indicate if residual energy is actively being drained from the battery 202. The indicator sub-assembly 314 may include any type of indicative electronic componentry including, but not limited to, a diode, such as a light-emitting diode 316 (LED) or a Zener diode. For example, the indicator sub-assembly 314 may include a light-emitting diode 316 that emits light when residual energy is being discharged from the battery 202. For instance, light emitted from the LED may indicate that power is actively draining from the battery 202, and that a subsequent loss of light emitted from the LED may indicate that the power of the battery has been discharged. Other indicative electronic componentry may include, but are not limited to, a buzzer (e.g., piezoelectric speaker), a display, an incandescent bulb, or a vibration motor). In another alternate embodiment, the indicator sub-assembly may be configured via wireless or wireline means to send to the system computer 230 and/or the battery management sub-system 208 a signal that the power discharge assembly 308 is actively draining power from the battery 202. The indicator sub-assembly 314 may include other electronic elements including, but not limited to, a second resistor 318.

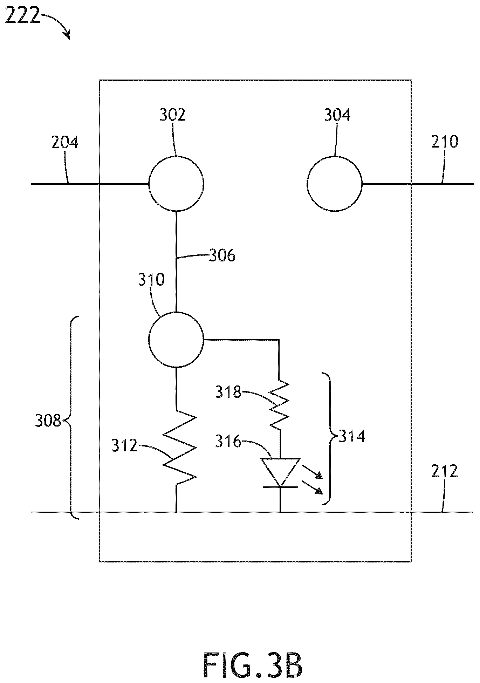

FIG. 3B illustrates a diagram of a close-up view of the battery switch 222 in a power discharge configuration, in accordance with one or more embodiments of the disclosure. In the power discharge configuration, the contact arm 306 is electrically coupled to the third terminal 310 instead of the second terminal 304. In this configuration, residual power is diverted through the power discharge assembly 308, where a portion of the residual power is drained (e.g., via the first resistor 312). Another portion of the residual power may also flow through the indicator sub-assembly 314, where an indicating element is activated, such as the light-emitting diode 316, as described above.

In embodiments, the battery switch 222 is configured as a one-time switch. For example, the battery switch 222 may include a mechanism or block that, when switched from the initial configuration to the power discharge configuration, the battery switch 222 cannot be switched back to the initial configuration (e.g., contact arm 306 cannot be decoupled from the third terminal of the power discharge assembly 308). Having battery switch 222 configured as a one-time switch prevents accidental attempts to charge the faulty battery 202 within the system 200.

In embodiments, the battery switch 222 includes an indicator that indicates when the battery switch has been switched from the initial configuration to the power discharge configuration (e.g., in addition to the indicator sub-assembly 314). For example, the battery switch 222 may include a hardware element that is moved or flipped when the battery switch 222 is activated, indicating to an operator that the battery switch 222 has been activated. In another example, the battery switch 222 may include a software or signaling component that is sent to the system computer 230 and/or battery management sub-system 208 when the battery switch 222 is activated. In this manner, an operator would be notified that the battery switch 222 has been activated, and, depending on the status of the indicator sub-assembly 314, would also be notified if the power discharge assembly 308 has effectively drained the residual energy from the battery 202.

In embodiments, the system 200 includes an end indicator configured to indicate when the residual power has been effectively drained from the battery 202. For example, the battery switch 222 may include a component or sub-switch (e.g., a color indicator or lever) that is activated when residual power is no longer flowing through the power discharge assembly 308, indicating to an operator that the battery 202 may be safely removed. In another example, signals received by the system computer 230 and/or the battery management sub-system 208 from the battery 202 and/or battery switch 222 that residual energy is no longer flowing through the power discharge assembly 308 may also act as an end indicator, causing the system computer 230 and/or battery management sub-system 208 to indicate to an operator that the residual power is no longer flowing through the power discharge assembly 308, and that the battery 202 may be safely removed.

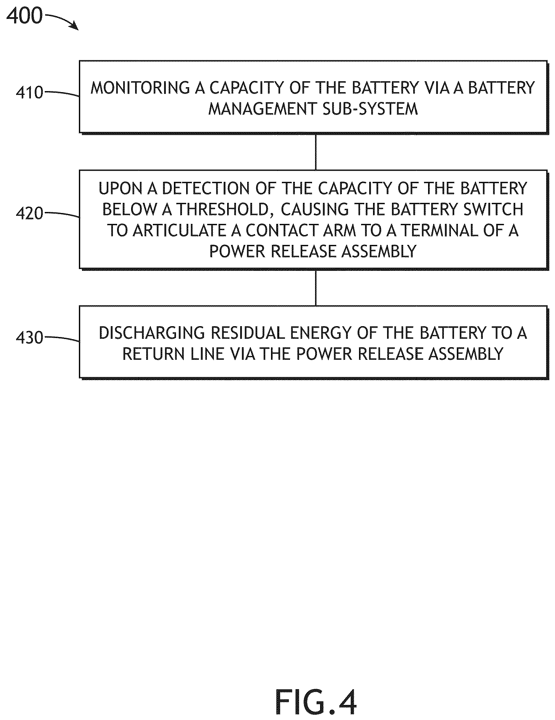

FIG. 4 illustrates a process flow diagram depicting a method 400 for discharging a battery 202 of a power system 200, in accordance with one or more embodiments of the disclosure. The method 400 may be utilized for draining batteries 202 in the system 200, such as faulty lithium batteries 202, so that they can be safely removed from the system 200 and transported away for recycling.

In embodiments, the method 400 includes a step 410 of monitoring a capacity of the battery via a battery management sub-system 208. For example, the battery management sub-system 208 may determine a state of charge (SoC) or a state of health (SoH) of a battery by determining if the battery has a reduction in capacity, displays a voltage drop below a threshold, exhibits low voltage or erratic voltage levels, displays increased internal resistance, and/or displays high or fluctuating temperatures during charging and discharging.

In embodiments, the method includes a step 420 upon a detection of the capacity of the battery 202 beyond a threshold, causing the battery switch to articulate the contact arm 306 to a terminal of a power discharge assembly 314. For example, if the system computer 230 and/or the battery management sub-system 208 determines via data gathered in the monitoring step 410 that the battery 202 is not performing to a threshold level, the battery management sub-system 208 and/or system computer 230 may cause the contact arm 306 of the battery switch 222 to switch or articulate from the second terminal 304 to the third terminal 310. In embodiments, the method 400 includes a step 430 of discharging residual energy of the battery to the return line 212 via the power discharge assembly 308. The method 400 may further include a step of removing the battery from the power system.

The one or more processors 218, 236 of the one or more controller 214, 232 may include any processor or processing element known in the art. For the purposes of the present disclosure, the term "processor" or "processing element" may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). In this sense, the one or more processors 218, 236 may include any device configured to execute algorithms and/or instructions (e.g., program instructions stored in memory 216, 234). In some embodiments, the one or more processors 218, 236 may be embodied as a desktop computer, mainframe computer system, workstation, image computer, parallel processor, networked computer, or any other computer system configured to execute program instructions. Further, the steps described throughout the present disclosure may be carried out by a single controller 214, 232 or, alternatively, multiple controllers 214, 232. Additionally, the controller 214, 232 may include one or more controllers housed in a common housing or within multiple housings.

The memory 216, 234 may include any storage medium known in the art suitable for storing program instructions executable by the associated one or more processors 218, 236. For example, the memory 216, 234 may include a non-transitory memory medium. By way of another example, the memory 216, 234 may include, but is not limited to, a read-only memory (ROM), a random-access memory (RAM), a magnetic or optical memory device (e.g., disk), a magnetic tape, a solid-state drive and the like. It is further noted that the memory 216, 234 may be housed in a common controller housing with the one or more processors 218, 236. In some embodiments, the memory 216, 234 may be located remotely with respect to the physical location of the one or more processors 218, 236 and the controller 214, 232. For instance, the one or more processors 218, 236 of the controller 214, 232 may access a remote memory (e.g., server), accessible through a network (e.g., internet or intranet).

Those having skill in the art will recognize that the state of the art has progressed to the point where there is little distinction left between hardware and software implementations of aspects of systems; the use of hardware or software is generally (but not always, in that in certain contexts the choice between hardware and software can become significant) a design choice representing cost vs. efficiency tradeoffs. Those having skill in the art will appreciate that there are various vehicles by which processes and/or systems and/or other technologies described herein can be implemented (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be implemented, none of which is inherently superior to the other in that any vehicle to be utilized is a choice dependent upon the context in which the vehicle will be deployed and the specific concerns (e.g., speed, flexibility, or predictability) of the implementer, any of which may vary. Those skilled in the art will recognize that optical aspects of implementations will typically employ optically oriented hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link, etc.).

Those having skill in the art will recognize that it is common within the art to describe devices and/or processes in the fashion set forth herein, and thereafter use engineering practices to integrate such described devices and/or processes into data processing systems. That is, at least a portion of the devices and/or processes described herein can be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true scope of the subject matter described herein. Furthermore, it is to be understood that the invention is defined by the appended claims.

While implementations of method 400 are discussed herein, it is further contemplated that various steps of the method 400 may be included, excluded, rearranged, and/or implemented in many ways without departing from the essence of the present disclosure. Accordingly, the foregoing embodiments and implementations of method 400 are included by way of example only and are not intended to limit the present disclosure in any way.
The disclosure comprises the following items:
1. A battery switch comprising:
   a first terminal electrically coupled to a battery;
   a second terminal electrically coupled to a battery management system;
   a contact arm electrically coupled to the first terminal and electrically couplable to the second terminal; and
   a power discharge assembly comprising:
      a third terminal electrically couplable to the contact arm;
      a first resistor electrically coupled to the third terminal and a return line;
      a second resistor electrically coupled to the third terminal; and
      a diode electrically coupled to the second resistor and the return line.
2. The battery switch of item 1, wherein the diode comprises a light-emitting diode (LED).
3. The battery switch of item 1 or item 2, wherein light emitted from the LED indicates that power is actively draining from the battery, wherein a subsequent loss of light emitted from the LED indicates that the power of the battery has been discharged.
4. The battery switch of any preceding item, wherein the diode comprises a Zener diode.
5. The battery switch of any preceding item, wherein the contact arm is configured to articulate from the second terminal to the third terminal and cannot articulate from the third terminal to the second terminal.
6. The battery switch of any preceding item, wherein upon an articulation of the contact arm from the second terminal to the third terminal, power is drained from the battery via the return line.
7. The battery switch of any preceding item, wherein the articulation of the contact arm from the second terminal to the third terminal is performed based on instructions from a controller.
8. An electrical system comprising:
   a battery;
   a battery switch comprising:
      a first terminal electrically coupled to the battery;
      a second terminal electrically coupled to a battery management sub-system;
      a contact arm electrically coupled to the first terminal and electrically couplable to the second terminal; and
      a power discharge assembly comprising:
         a third terminal electrically couplable to the contact arm;
         a first resistor electrically coupled to the third terminal and a return line;
         a second resistor electrically coupled to the third terminal; and
         a diode electrically coupled to the second resistor and the return line.
9. The electrical system of item 8, further comprising the battery management sub-system, wherein the battery management sub-system comprises a controller comprising one or more processors, wherein the one or more processors are configured to execute a set of program instructions stored in non-transitory memory, wherein the set of program instructions are configured to cause the one or more processors to:
   monitor a capacity of the battery; and
   upon a detection of the capacity of the battery below a threshold, at least one of (1) cause the battery switch to articulate the contact arm from the second terminal to the third terminal; or (2) send a threshold signal to a battery system computer communicatively coupled to the battery switch, wherein the battery system computer then causes the battery switch to articulate the contact arm from the second terminal to the third terminal.
10. The electrical system of item 8 or item 9, wherein the capacity of the battery is associated with a voltage, a voltage range, an internal resistance measurement, or a current.
11. The electrical system of any of items 8-10, further comprising a power supply electrically coupled to the battery management sub-system.
12. The electrical system of any of items 8-11, wherein the diode comprises a light-emitting diode (LED).
13. The electrical system of any of items 8-12, wherein light emitted from the LED indicates that power is actively draining from the battery, wherein a subsequent loss of light emitted from the LED indicates that the power of the battery has been discharged.
14. The electrical system of any of items 8-13, wherein the diode comprises a Zener diode.
15. The electrical system of any of items 8-14, wherein the contact arm cannot articulate from the third terminal to the second terminal.
16. The electrical system of any of items 8-15, wherein upon an articulation of the contact arm from the second terminal to the third terminal, power is drained from the battery via the return line.
17. The electrical system of any of items 8-16, wherein the articulation of the contact arm from the second terminal to the third terminal is performed based on instructions from a controller.
18. A method for discharging a battery of a power system comprising:
   monitoring a capacity of the battery via a battery management sub-system;
   upon a detection of the capacity of the battery below a threshold, causing a contact arm of a battery switch to articulate to a terminal of a power discharge assembly; and
   discharging residual energy of the battery to a return line via the power discharge assembly.
19. The method of item 18, further comprising removing the battery from the power system.
20. The method of item 18 or item 19, wherein upon causing the contact arm of the battery switch to articulate from the terminal of the power discharge assembly, the contact arm cannot be decoupled from the terminal of the power discharge assembly.

## Claims

1. A battery switch comprising:
a first terminal electrically coupled to a battery;
a second terminal electrically coupled to a battery management system;
a contact arm electrically coupled to the first terminal and electrically couplable to the second terminal; and
a power discharge assembly comprising:
a third terminal electrically couplable to the contact arm;
a first resistor electrically coupled to the third terminal and a return line;
a second resistor electrically coupled to the third terminal; and
a diode electrically coupled to the second resistor and the return line.

2. The battery switch of claim 1, wherein the diode comprises a light-emitting diode, "LED".

3. The battery switch of claim 2, wherein light emitted from the LED indicates that power is actively draining from the battery, wherein a subsequent loss of light emitted from the LED indicates that the power of the battery has been discharged.

4. The battery switch of claim 1, wherein the diode comprises a Zener diode.

5. The battery switch of any preceding claim, wherein the contact arm is configured to articulate from the second terminal to the third terminal and cannot articulate from the third terminal to the second terminal.

6. The battery switch of claim 5, wherein upon an articulation of the contact arm from the second terminal to the third terminal, power is drained from the battery via the return line.

7. The battery switch of claim 6, wherein the articulation of the contact arm from the second terminal to the third terminal is performed based on instructions from a controller.

8. An electrical system comprising:
a battery; and
the battery switch of any preceding claim.

9. The electrical system of claim 8, further comprising the battery management system, wherein the battery management system comprises a controller comprising one or more processors, wherein the one or more processors are configured to execute a set of program instructions stored in non-transitory memory, wherein the set of program instructions are configured to cause the one or more processors to:
monitor a capacity of the battery; and
upon a detection of the capacity of the battery below a threshold, at least one of (1) cause the battery switch to articulate the contact arm from the second terminal to the third terminal; or (2) send a threshold signal to a battery system computer communicatively coupled to the battery switch, wherein the battery system computer then causes the battery switch to articulate the contact arm from the second terminal to the third terminal.

10. The electrical system of claim 8 or claim 9, wherein the capacity of the battery is associated with a voltage, a voltage range, an internal resistance measurement, or a current.

11. The electrical system of any of claims 8-10, further comprising a power supply electrically coupled to the battery management system.

12. A method for discharging a battery of a power system comprising:
monitoring a capacity of the battery via a battery management system;
upon a detection of the capacity of the battery below a threshold, causing a contact arm of a battery switch to articulate to a terminal of a power discharge assembly; and
discharging residual energy of the battery to a return line via the power discharge assembly.

13. The method of claim 12, further comprising removing the battery from the power system.

14. The method of claim 12 or claim 13, wherein upon causing the contact arm of the battery switch to articulate from the terminal of the power discharge assembly, the contact arm cannot be decoupled from the terminal of the power discharge assembly.
